Europäisches Patentamt

European Patent Office

Office européen des brevets

(11) Veröffentlichungsnummer: **0 079 549**

A2

(12) **EUROPÄISCHE PATENTANMELDUNG**

(21) Anmeldenummer: 82110229.0

(22) Anmeldetag: 06.11.82

(51) Int. Cl.³: **G 01 F 11/26**

(30) Priorität: 14.11.81 DE 3145356

(43) Veröffentlichungstag der Anmeldung:
25.05.83 Patentblatt 83/21

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf 1(DE)

(72) Erfinder: vom Hofe, Dieter
Uedesheimerweg 2
D-5000 Köln 71(DE)

(54) Verschluss eines Verpackungsbehälters.

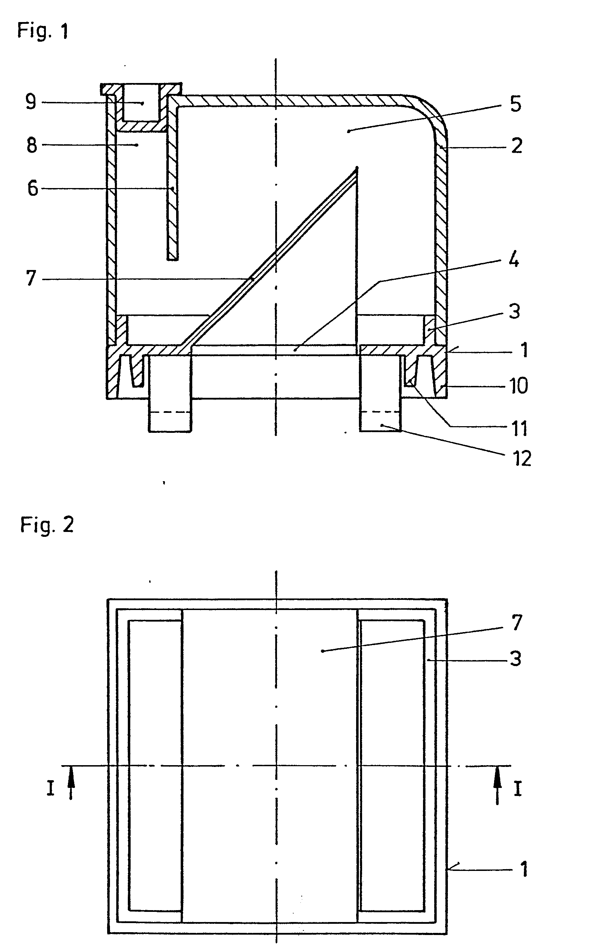

(57) Es wird ein Verschluß eines Verpackungsbehälters für flüssige oder rieselfähige Produkte mit mechanisch stabilisierender Hülle und gegebenenfalls darin eingesetzter, dichtender Auskleidung beschrieben. Auf die Öffnung der Hülle und gegebenenfalls deren dichtender Auskleidung wird ein Deckel (1) adaptiert. Für die Anwendung bei körnigen oder flüssigen Wasch- und Reinigungsmitteln sowie Lebensmitteln soll ein Dosiergerät geschaffen werden, das ein sichtbares Dosieren ermöglicht. Erfindungsgemäß wird über die Produktaustrittsöffnung (4) des auf die Hülle adaptierten Deckels (1) eine Haube (2) mit integrierter Dosiereinrichtung und Produktauslaß (8) gesetzt (Figur 1).

Fig. 1

EP 0 079 549 A2

0079549
HENKEL KGaA
ZR-FE/Patente
Bor/C

Patentanmeldung
D 6475 EP

"Verschluß eines Verpackungsbehälters"

Die Erfindung betrifft einen Verschluß eines Verpackungsbehälters für flüssige oder rieselfähige Produkte mit mechanisch stabilisierender Hülle. Die Hülle kann als Faltschachtel, Kunststoff-Flasche, Metall- oder Glasgebinde oder dergleichen ausgebildet werden.

Ein Verpackungsbehälter mit mechanisch stabilisierender Hülle und darin eingesetzter, insbesondere ausgehend von einem Vorformling geblasener, dichtender Auskleidung, bei dem Hülle und Auskleidung nach getrennter Herstellung mit Hilfe eines an ihre Öffnungen adaptierten, eine Produktaustrittsöffnung der Auskleidung umfassenden Adapterdeckels miteinander gekoppelt sind, wird in der DE-OS 30 45 710.4 beschrieben. In dem bekannten Verbindungssystem zweier Packmittel-Komponenten hat der Adapterdeckel im wesentlichen eine reine Verbindungsfunktion und dient dazu, das Konfektionieren zu vereinfachen. Dabei wird der Adapterdeckel bereits vor dem Umformen, d. h. Aufblasen, des zum Herstellen der Auskleidung verwendeten Vorformlings über letzteren geschoben und auf dem Vorformling in einer gegen Verdrehung in Umfangsrichtung gesicherten Position arretiert. Durch Umformen des Vorformlings, beispielsweise im Streckblasverfahren, erfolgt dann - vor oder nach dem Einschieben in die Hülle - auch ein Sichern des Adapterdeckels in axialer Richtung der aus dem Vorformling hergestellten Auskleidung. Zum Entstehen der festen, unlösbaren Verbindung zwischen Auskleidung und Adapterdeckel ist also das Aufsetzen des letzteren bereits auf den

**0079549**
HENKEL KGaA
ZR-FE/Patente

2

Vorformling und das Aufblasen des Vorformlings durch den Adapterdeckel hindurch, insbesondere mit Hilfe eines gesonderten Aufnahme- bzw. Blasdorns, erforderlich. Die im Bekannten vorgesehenen Adapterdeckel bestehen daher im wesentlichen aus einem die Produktaustrittsöffnung umgebenden Ringbereich mit den Kupplungsteilen zum Verbinden von Auskleidung und Hülle.

Der Erfindung liegt die Aufgabe zugrunde, eine für flüssige oder für pulvrige bzw. körnige Wasch- und Reinigungsmittel sowie Lebensmittel geeignete Verpackung zu schaffen, die ein von außen sichtbares Dosieren des jeweiligen Produkts ermöglicht, bei der ein direkter Produktkontakt mit der Hand nicht erforderlich ist und bei der den Aufwand vergrößernde Hals- und Verschlußteile nicht benötigt werden. Die erfindungsgemäße Lösung besteht bei dem Verschluß eines Verpackungsbehälters für flüssige oder rieselfähige Produkte mit mechanisch stabilisierender Hülle darin, daß über die Produktaustrittsöffnung eines auf die Hülle und gegebenenfalls deren dichtende Auskleidung adaptierten Deckels eine Haube mit integrierter Dosiereinrichtung und Produktauslaß gesetzt ist.

Durch die Erfindung wird ein Adapterdeckel mit aufgesetzter Haube und darin integrierter Dosiervorrichtung für rieselfähige Produkte einerseits und flüssige Produkte andererseits geschaffen. In beiden Fällen ist der Produktauslaß der Haube zweckmäßig mit einer Kappe zu verschließen. Die Haube und der Adapterdeckel sollen längs eines teilweise oder ganz, insbesondere am Deckelrand, umlaufenden Zentrierstegs, vorzugsweise unlösbar, dicht miteinander zu verbinden sein. Außerdem soll die Haube zumindest so weit aus transparentem Material bestehen, daß der Dosiervorgang von außen in den Einzelheiten zu beobachten ist.

Die Ausgestaltung für rieselfähige Produkte findet bevorzugt Anwendung bei Verpackungen für pulvrige oder körnige Wasch- und Reinigungsmittel sowie als Lebensmittelverpackung. Sie hat in dieser Anwendung vor allem den Vorteil einer preiswerten, in die Verpackung integrierten Dosiervorrichtung, wobei das Dosieren durch Verwendung transparenter Bauteile auf einfache Weise sichtbar zu machen ist. Da das Dosieren innerhalb der auf den Adapter aufgesetzten Haube stattfindet, besondere Dosiergefäße also nicht benötigt werden, läßt sich ein direkter Produktkontakt mit der Hand ohne Schwierigkeiten vermeiden.

Der Adapter mit aufgesetzter Haube und darin integrierter Dosiervorrichtung für flüssige Produkte findet im wesentlichen in den gleichen Bereichen wie der für feste Produkte vorgesehene Adapter Anwendung. Zusätzlich zu den schon genannten Vorteilen ergibt sich beim Dosieren flüssiger Produkte im besonderen Maße die Möglichkeit, eine Dosierskala an der Haube anzubringen und selbst Konzentrate individuell zu dosieren. Bei der Anwendung auf Flüssigkeiten kommt außerdem der Vorteil hinzu, daß besondere Hals- und Verschlußteile, wie sie beispielsweise bei

**0079549**

**HENKEL KGaA**
ZR-FE/Patente

4

bisher verwendeten Kunststoff-Flaschen, Metall- oder Glasgeweben erforderlich waren, wegfallen können. Bei der Ausgestaltung zum Dosieren flüssiger Produkte ergibt sich schließlich
die Möglichkeit, den Querschnitt des behälterseitigen Einlasses
der integrierten Dosiervorrichtung der Haube klein gegen den
Querschnitt des Produktauslasses der Haube zu machen. Es kann
dann ein relativ langsames und exaktes Dosieren erfolgen, die
Dosierkammer läßt sich aber schnell entleeren.

Anhand der schematischen Darstellung von Ausführungsbeispielen werden weitere Einzelheiten der Erfindung erläutert. Es zeigen:

Fig. 1    einen Schnitt durch einen Adapterdeckel mit aufgesetzter, transparenter Haube entsprechend der Linie I-I von Fig. 2;

Fig. 2    den Adapterdeckel ohne Haube in der Draufsicht;

Fig. 3    den Adapterdeckel in der Ansicht von unten;

Fig. 4    ein abgewandelter Adapterdeckel mit aufgesetzter Haube; und

Fig. 5    einen Schnitt längs der Linie V-V von Fig. 4.

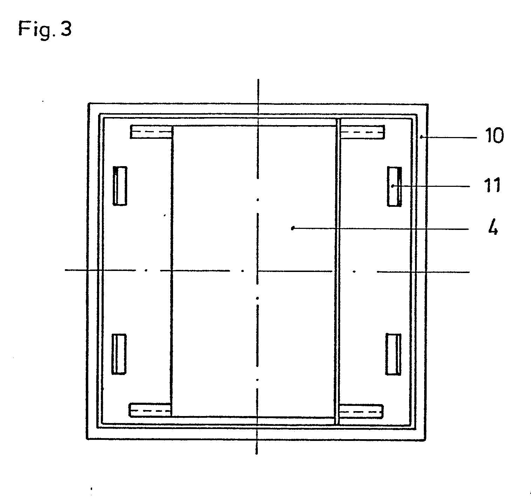

Fig. 1 zeigt im Schnitt entlang der Linie I-I von Fig. 2 den Adapterdeckel 1 mit aufgesetzter transparenter Haube 2. Beide Teile sind längs des umlaufenden Zentrierstegs 3 unlösbar und dicht miteinander verbunden. Der Adapterdeckel 1 besitzt in Fig. 1 bis 3 eine rechteckige Öffnung 4, durch die beim Dosieren Produkt in die Dosierkammer 5 gelangt. Der durch die Schikanewirkung des Stegs 6 und der Trennwand 7 bewirkte Dosiervorgang ist an sich bekannt. Die Produktaustrittsöffnung 8 der Haube 2 kann auf dem Transportweg bis zum Verbraucher mit einer Verschlußkappe 9 abgedeckt werden. Der Adapterdeckel 1 kann durch Einklemmen des Randes des jeweiligen (nicht gezeichneten) Behälters zwischen dem umlaufenden Rand 10 und dem Klemmsteg 11 sowie mit Hilfe der Arretiernocken 12 befestigt werden. Es kann stattdessen aber auch jede andere Kupplungsmöglichkeit mit dem zugeordneten Behälter vorgesehen werden.

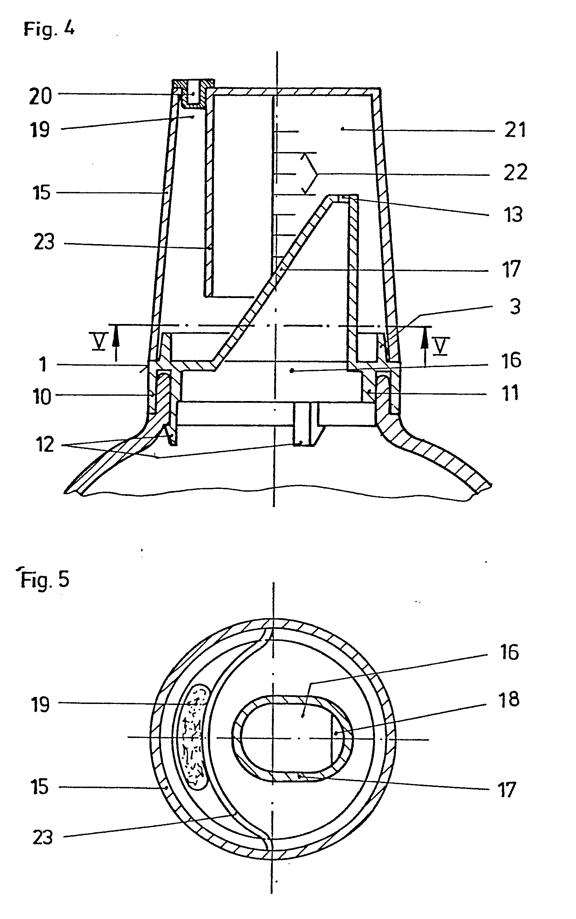

In den Fig. 4 und 5 werden Schnitte durch einen Adapterdeckel mit aufgesetzter transparenter Haube 15 schematisch dargestellt. Fig. 5 ist ein Schnitt längs der Linie V-V von Fig. 4. Entspre-

6

chend der runden Ausführungsform werden der Klemmsteg 11 und
der umlaufende Rand 10 des Adapterdeckels 1 im Gegensatz zum
Ausführungsbeispiel von Fig. 1 bis 3 umlaufend ausgebildet.
Die Arretiernocken 12 ragen wie in Fig. 1 aus dem Klemmsteg 11
heraus.

Der Adapterdeckel 1 besitzt in Fig. 4 und 5 anders als in den
Fig. 1 bis 3 eine kleinere ovale Öffnung 16 am behälterseitigen Einlaß der Dosiervorrichtung. Die Öffnung 16 mündet durch
Formgebung der Trennwand 17 in eine noch kleinere Dosieröffnung 18. Letztere wird derart dimensioniert, daß ein relativ
langsames und exaktes Dosieren erfolgen kann. Die Produktaustrittsöffnung 19 der Haube 2, die durch eine Verschlußkappe 20
zu verschließen ist, wird dagegen so groß dimensioniert, daß
beim Dosiervorgang ein so schnelles Entleeren der Dosierkammer 21 erfolgt, daß diese vollständig entleert ist, bevor
erneut Produkt durch die Dosieröffnung 18 einfließt und mittels
der Skalenstriche 22 exakt dosiert werden kann. Das Ablaufen
aus dem durch die Schikanewand 23 abgegrenzten Bereich innerhalb der Haube 2 soll also schneller erfolgen als der Zulauf
von Produkt durch die Dosieröffnung 18.

**0079549**
HENKEL KGaA
ZR-FE/Patente

Patentanmeldung

D 6475 EP

7

## Bezugszeichenliste

  1 = Adapterdeckel

  2 = Haube

  3 = Zentriersteg

  4 = Öffnung

  5 = Dosierkammer

  6 = Steg

  7 = Trennwand

  8 = Produktaustrittsöffnung (2)

  9 = Verschlußkappe

10 = Rand

11 = Klemmsteg

12 = Arretiernocken

15 = Haube (Fig. 4 und 5)

16 = Öffnung

17 = Trennwand

18 = Dosieröffnung

19 = Austrittsöffnung

20 = Verschlußkappe

21 = Dosierkammer

22 = Skalenstriche

23 = Schikanewand

8

P a t e n t a n s p r ü c h e

1. Verschluß eines Verpackungsbehälters für· flüssige oder rieselfähige Produkte mit mechanisch stabilisierender Hülle, dadurch gekennzeichnet, daß über die Produktaustrittsöffnung (4, 16) eines auf die Hülle und gegebenenfalls deren dichtende Auskleidung adaptierten Deckels (1) eine Haube (2, 15) mit integrierter Dosiereinrichtung und Produktauslaß (8, 19) gesetzt ist.

2. Verschluß nach Anspruch 1, dadurch gekennzeichnet, daß die Haube (2, 15) und der Adapterdeckel (1) längs eines teilweise oder ganz, insbesondere am Deckelrand, umlaufenden Zentrierstegs (3), vorzugsweise unlösbar, dichtend miteinander verbunden sind.

3. Verschluß nach Anspruch 1 oder 2, dadurch gekennzeichnet, daß die Haube (2, 15) zumindest insoweit aus transparentem Material besteht, als der Dosiervorgang von außen zu beobachten ist.

4. Verschluß nach einem oder mehreren der Ansprüche 1 bis 3, dadurch gekennzeichnet, daß der Produktauslaß (8, 19) der Haube (2, 15) mit einer Kappe (9, 20) zu verschließen ist.

5. Verschluß nach einem oder mehreren der Ansprüche 1 bis 4, dadurch gekennzeichnet, daß der Querschnitt des behälterseitigen Einlasses, d. h. der Dosieröffnung 18, der integrierten Dosiervorrichtung der Haube (15) klein gegen den Querschnitt des Produktauslasses (19) der Haube ist (Fig. 4 und 5).

Fig. 1

9 ——
8 ——
6 ——

7 ——

—— 5
—— 2

—— 4

—— 3
—— 1
—— 10
—— 11
—— 12

Fig. 2

—— 7
—— 3

I ↑ I

↑ I

—— 1

Fig. 3

10

11

4

Fig. 4

Fig. 5